# EUROPÄISCHE PATENTSCHRIFT

(11) **EP 0 614 688 B1**
(45) Veröffentlichungstag und Bekanntmachung des Hinweises auf die Patenterteilung: **11.06.1997**
(21) Anmeldenummer: 93810155.7
(22) Anmeldetag: 03.03.1993
(51) Int. Cl.: B01D 9/00

(54) **Vorrichtung zur Erzeugung von Kristallkeimen in Schmelzen und eine derartige Vorrichtung enthaltende Kristallisationsanlage**
Apparatus for generating seed crystals in melts and crystallisation plant including such an apparatus
Dispositif pour la génération des cristaux germes dans des matières fondues et installation de cristallisation comprenant un tel dispositif

(43) Veröffentlichungstag der Anmeldung: 14.09.1994
(73) Patentinhaber: Ciba Specialty Chemicals Holding Inc., 4057 Basel (CH)
(72) Erfinder: Schneeberger, Ricardo, Dr., CH-4147 Aesch (CH); Horisberger, Hans, CH-4132 Muttenz (CH); Büttiker, Rudolf, Dr., CH-4125 Riehen (CH)

(56) Entgegenhaltungen:
- CH-A- 89 551
- CH-A- 468 202
- FR-A- 2 634 666
- US-A- 2 813 099

## Beschreibung

Die Erfindung betrifft eine Vorrichtung zur Erzeugung von Kristallkeimen in Schmelzen gemäss Oberbegriff des Patentanspruchs 1. Weiters betrifft die Anmeldung auch eine Kristallisationsanlage gemäss Oberbegriff des Patentanspruchs 11.

Viele Schmelzen können mit den herkömmlichen kontinuierlichen Kristallisationsanlagen (Kühlwalzen, Kühlbänder) nicht kristallisiert werden, da der Kristallisationsprozess zu träge abläuft. Solche Produkte werden oft in Kristallisierwannen oder Fässer abgefüllt, wo sie dann innerhalb von Tagen oder Wochen kristallisieren. Bekannt sind auch Kristallisationsanlagen, bei denen Granulat aus sogenannten 2-Phasen Gemischen hergestellt wird. Dabei wird das Ausgangsprodukt in einem sogenannten Vorkristallisator mit Kristallkeimen angereichert, und die vorkristallisierte Schmelze danach auf einem Kühlband auskristallisiert. Aus der DE-A-32 09 747 ist ein Vorkristallisator zur Erzeugung von Kristallkeimen in Schmelzen, zum Animpfen der Schmelze, bekannt, der als liegender zylindrischer Wärmetauscher ausgebildet ist. Die an den gekühlten Aussenwänden gebildeten Kristalle werden kontinuierlich von wandgängigen Schaufeln abgeschabt. Die Schaufeln sind an einer rotierenden Welle angeordnet, die von einem Motor angetrieben wird. Die rotierende Welle ist an den beiden Stirnseiten des liegenden zylindrischen Wärmetauschers gelagert. Um eine ausreichende Zirkulierung der Schmelze in dem Wärmetauscher aufrecht zu erhalten, ist zusätzlich ein externer Kreislauf für die bereits "angeimpfte" Schmelze vorgesehen, über den ein gewisser dosierbarer Anteil der bereits mit Kristallkeimen versehenen Schmelze aus dem Wärmetauscher abgepumpt und eingangs des Wärmetauschers dem noch unvorkristallisierten Ausgangsprodukt zugemischt wird.

Der beschriebene Vorkristallisator weist eine sehr aufwendige Konstruktion auf. Das Erfordernis zweier aussenliegender Lager für die liegende rotierende Welle mit den Schaufeln, die zusätzlichen Leitungen und Pumpen für das Umpumpen eines Teils der bereits "angeimpften" Schmelze machen derartige Vorrichtungen zur Erzeugung von Kristallkeimen in Schmelzen relativ teuer. Zudem nehmen derartige als liegende Wärmetauscher ausgebildete Vorrichtungen samt dem erforderlichen zusätzlichen externen Kreislauf relativ viel Platz ein.

Es besteht daher die Aufgabe, derartige Vorrichtungen zur Erzeugung von Kristallkeimen in Schmelzen dahingehend zu verbessern, dass der konstruktive Aufwand und in Folge die Kosten für eine derartige Vorrichtung verringert werden. Zudem soll die Vorrichtung auch weniger Platz einnehmen als die bekannten Vorrichtungen, und sie soll geeignet sein für die Integration in eine Kristallisationsanlage insbesondere für Ausgangsprodukte mit hohem Molekulargewicht.

All diese und noch weitere Aufgaben werden durch eine Vorrichtung zur Erzeugung von Kristallkeimen in einer Schmelze gelöst, welche die im kennzeichnenden Teil des Patentanspruch 1 angeführten Merkmale aufweist. Besonders bevorzugte Ausführungsvarianten der erfindungsgemässen Vorrichtung sind Gegenstand der abhängigen Patentansprüche. Eine die erfindungsgemässe Vorrichtung zur Erzeugung von Kristallkeimen enthaltende Kristallisationsanlage ist Gegenstand des Patentanspruchs 11.

Die erfindungsgemässe Vorrichtung zur Erzeugung von Kristallkeimen in Schmelzen weist ein vertikal orientiertes, geschlossenes Gefäss mit einem Gefässboden und mit wenigstens einem Einlass für die Schmelze und mit wenigstens einer Auslassöffnung für die mit Kristallkeimen versehene angeimpfte Schmelze auf. Ein vorzugsweise ringförmig verlaufender Bereich der Gefässwand ist als Kühlfläche ausgebildet. Im Inneren des Gefässes ist ein Schabelement angeordnet, welches eine motorisch antreibbare rotierende Welle umfasst, die sich axial durch das Gefäss bis kurz vor den Gefässboden erstreckt. An ihrem Gefässboden-seitigen Ende ist die Welle mit wenigstens einem Schabarm ausgestattet, der sich ausgehend vom Gefässboden-nahen Ende der Welle zunächst in Richtung der Gefässwand erstreckt und dort im wesentlichen parallel zu der ringförmigen Kühlfläche und achsparallel zu der Antriebswelle verläuft. Auf dem Schabarm sind vorzugsweise ein oder mehrere Schabmesser angeordnet, die im Betrieb im Bereich der Kühlfläche an der Innenwand des Gefässes entlangstreichen. Das Schabelement ist beheizbar.

Die erfindungsgemässe Kristallisationsanlage umfasst ein Vorlagenbehältnis für die Schmelze, eine Vorrichtung der zuvor beschriebenen Art zur Erzeugung von Kristallkeimen in der Schmelze und vorzugsweise einen Prillturm zur Erzeugung des Granulats. In dem Prillturm wird die mit Kristallkeimen versehene angeimpfte Schmelze in einen gekühlten Gasstrom versprüht bzw. vertropft. Die Tropfen kristallisieren während ihres Absinkens im freien Fall. Das derart erzeugte Granulat wird am Turmboden ausgetragen.

Im folgenden wird die Erfindung mit den als wesentlich erscheinenden Einzelheiten unter Bezugnahme auf die schematischen Zeichnungen erläutert. Es zeigen:
- Fig. 1: einen Axialschnitt eines ersten Ausführungsbeispiels der erfindungsgemässen Vorrichtung,
- Fig. 2a-d: Detaildarstellungen der erfindungsgemässen Vorrichtung,
- Fig. 3: einen Axialschnitt eines zweiten Ausführungsbeispiels der erfindungsgemässen Vorrichtung,
- Fig. 4: eine Detailansicht eines Schabelementes, und
- Fig. 5: ein Ausführungsbeispiel einer erfindungsgemässen Kristallisationsanlage.

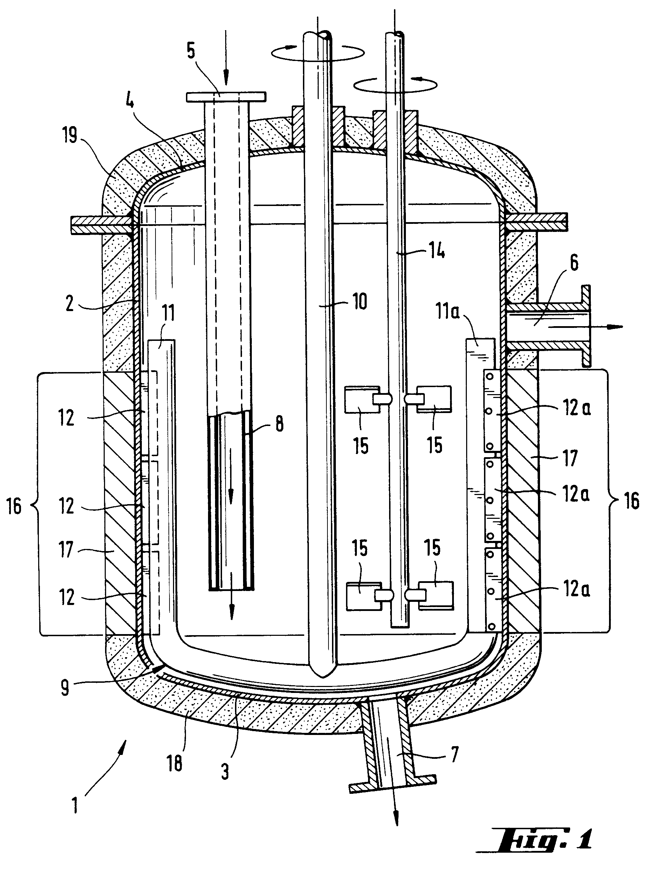

Ein erstes Ausführungsbeispiel der erfindungsgemässen Vorrichtung zur Erzeugung von Kristallkeimen in einer Schmelze ist in Fig. 1 gesamthaft mit dem Bezugszeichen 1 versehen. Insbesondere umfasst die als Vorkristallisator bezeichnete Vorrichtung 1 ein vertikal orientiertes, geschlossenes vorzugsweise zylindrisches Gefäss 2 mit einem Gefässboden 3 und mit wenigstens einem Einlass 5 für die Schmelze und mit wenigstens einer Auslassöffnung 7 für die mit Kristallkeimen versehene angeimpfte Schmelze. Gemäss dem in Fig. 1 dargestellten Ausführungsbeispiel weist das Gefäss 2 einen abnehmbaren Deckel 4 auf, der den Zugang in das Innere des Gefässes 2 ermöglicht. Anstelle des abnehmbaren Deckels 4 kann das Gefäss auch einen abnehmbaren bzw. wegschwenkbaren Gefässboden 3 aufweisen. Die Auslassöffnung 7 ist im Boden 3 des Gefässes vorgesehen und mit Hilfe nicht dargestellter Verschliessmittel absperrbar. Der Einlass 5 für die Schmelze ist im Deckel 4 des Gefässes 2 vorgesehen. In dem dargestellten Ausführungsbeispiel erstreckt sich vom Einlass 5 im Deckel 4 ein Rohr 8 durch das Gefässinnere und mündet kurz vor den Gefässboden 3. Das Rohr 8 ist beheizbar. Vorzugsweise ist das Rohr 8 ein Doppelmantelrohr mit halbseitiger Zu- bzw. Abfuhr für ein Heizmedium, beispielsweise Öl, Wasser, Dampf oder Heissluft.

In der Seitenwand des Gefässes 2 ist ein Überlauf 6 angeordnet, der über eine beheizbare Rohrleitung beispielsweise mit einem Vorlagenbehältnis für die Schmelze verbunden ist. Auf diese Weise kann z.B. überschüssige Schmelze vom Gefäss 2 zu Vorlagenbehältnis zurückfliessen und auf diese Weise der Füllgrad des Gefässes 2 einfach geregelt werden, wie an späterer Stelle noch näher ausgeführt wird. Es versteht sich, dass der Einlass 5, der Überlauf 6 und die Auslassöffnung 7 mit nicht dargestellten Absperreinrichtungen versehen sein können.

Ein vorzugsweise ringförmig verlaufender Bereich 16 der Wand des Gefässes 2 ist als Kühlfläche ausgebildet. Dazu wird ein Bereich 16 der Gefässwand, der sich etwa vom Gefässboden 3 bis etwa 3/5 - 2/3 der Höhe des Gefässes 2 erstreckt, gekühlt. Auf die Art der Kühlung diese Bereiches der Gefässwand wird an späterer Stelle noch näher eingegangen.

Im Inneren des Gefässes 2 ist ein Schabelement 9 angeordnet. Das Schabelement 9 umfasst eine motorisch antreibbare rotierende Welle 10, die sich axial durch das Gefäss 2 bis kurz vor den Gefässboden 3 erstreckt. An ihrem gefässbodenseitigen Ende ist die Welle 10 mit wenigstens einem Schabarm 11 ausgestattet, der sich ausgehend vom gefässbodennahen Ende der Welle 10 zunächst in Richtung der Gefässwand erstreckt und dort vertikal zu der ringförmigen Kühlfläche 16 und im wesentlichen achsparallel zu der Antriebswelle 9 verläuft. Am vertikalen Bereich des Schabarms 11 sind ein oder mehrere Schabmesser 12 angebracht, die im Betrieb im Bereich der Kühlfläche 16 an der Innenwand des Gefässes 2 entlangschneiden.

In der in Fig. 1 dargestellten Variante 1 der erfindungsgemässen Vorrichtung ist das Schabelement 9 als Schabanker ausgebildet. Dabei liegen zwei Schabarme 11, 11a einander gegenüber und erstrecken sich ausgehend vom gefässbodennahen Ende der Welle 10 zunächst in Richtung der Gefässwand und verlaufen dort vertikal zu der ringförmigen Kühlfläche 16 und im wesentlichen achsparallel zu der rotierbaren Welle 10. Im Betrieb streichen die Schabmesser 12, 12a der beiden gegenüberliegenden Schabarme 11, 11a im Bereich der Kühlfläche 16 an der Innenwand des Gefässes 2 entlang und schaben auf diese Weise an den Kühlflächen gebildete Kristalle ab. Es versteht sich, dass das Schabelement 9 auch mehrere Schabarme, vorzugsweise bis zu 4 Schabarme aufweisen kann, die am gefässbodennahen Ende der Welle 10 am Umfang verteilt angeordnet sind.

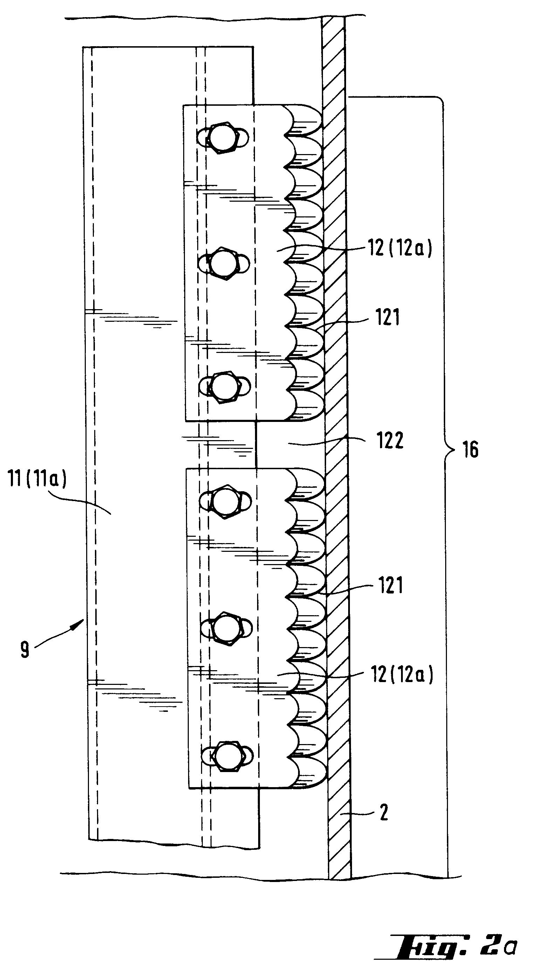

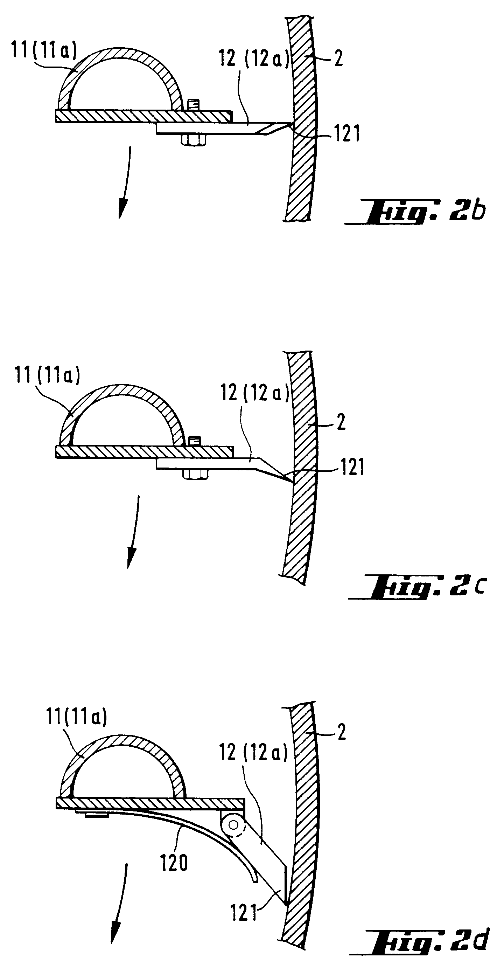

In den Fig. 2a-2d sind Details von Anordnungen der Schabmesser 12 am jeweiligen Schabarm 11 dargestellt. Gemäss Fig. 2a sind vorzugsweise mehrere Schabmesser 12 an einem Schabarm 11 angeordnet. Zwischen den einzelnen Messern 12 sind jeweils kleine Zwischenräume 122 ausgespart, durch welche die von der Kühlfläche 16 abgeschabten Kristalle leichter in das Schmelzenvolumen gelangen können. Das schneidenartige Vorderende 121 jedes Schabmessers 12 ist vorzugsweise gewellt, was das Abschaben der Kristalle erleichtert. Vorzugsweise sind die Schneidemesser 12 derart an den Schabarmen 11 befestigt, dass ihr Überstand derart verstellbar ist, dass Ungleichmässigkeiten der Behälterwand ausgeglichen werden können bzw. der Abstand des vertikalen Bereichs des Schabarms 11 von der Kühlfläche 16 einstellbar ist. Beispielsweise sind dazu die Messer 12 mit Langlöchern versehen und auf die Schabarme 11 aufgeschraubt. Die schneidenartigen Vorderenden 121 der Messer 12 können radial an der Kühlfläche 16 anstossen (Fig. 2b), sie können aber auch gegenüber der radialen Richtung geneigt sein (Fig. 2c und 2d). Dabei ist die Neigung des schneidenartigen Vorderenden 121 eines Messer 12 derart, dass das Vorderende 121 im Betrieb gegenüber dem Schabarm 11 vorläuft. In einer besonders bevorzugten Ausführungsvariante der Erfindung sind die Schabmesser 12 am jeweiligen Schabarm 11 gegen die Stellkraft einer Feder 120 schwenkbar gelagert (Fig. 2d). Auf diese Weise können Ungleichmässigkeiten der Gefässwand bzw. des Abstandes zwischen dem vertikalen Bereich eines Schabarms 11 und der Kühlfläche 16 und damit des Anpressdruckes der Messer 12 an die Kühlfläche 16 noch besser ausgeglichen werden. Selbstverständlich kann auch jeder Schabarm selbst an seinem vorderen Ende, welches etwa parallel zu der Kühlfläche verläuft, als Schabanordnung ausgebildet sein. Diese Schabanordnung kann, wie im Falle von Schabmessern, eine durchgehende klingenartige Schabkante aufweisen. Vorzugsweise ist die Schabkante aber nicht durchgehend, sondern weist, wie im Falle der in einem Abstand voneinander angeordneten Messer, Unterbrechungen auf, durch welche die abgeschabten Kristalle leichter in die Schmelze gelangen können.

Zur besseren Verteilung der von der ringförmigen Kühlfläche 16 abgeschabten Kristalle in der Schmelze und zu besseren Agitation der Schmelze, um jeweils neue Schmelze in Berührung mit der Kühlfläche 16 zu bringen, ist innerhalb des Gefässes 2 ein vorzugsweise beheizbarer Turbinenrührer vorgesehen. Der Turbinenrührer umfasst eine rotierbare Achse 14, die sich etwa achsparallel zu dem Schabelement 9 bis kurz vor den Gefässboden erstreckt. Entlang der Längserstreckung der Achse 14 sind Schaufeln 15 über den Umfang verteilt angeordnet. Die Beheizung des Turbinenrührers 14, 15 erfolgt beispielsweise in analoger Weise zu der des Schabelementes 9. Der Turbinenrührer 14, 15 dient nicht nur zur Agitation der Schmelze und zur besseren Verteilung der abgeschabten Kristalle in der Schmelze. Mit Hilfe des Turbinenrührers 14, 15 können auch grössere Kristallagglomerationen in der Schmelze zerkleinert werden.

In einer bevorzugten Ausführungsvariante der Erfindung ist der Boden 3 des Gefässes 2 beheizbar ausgebildet. Dadurch wird eine Kristallisation der Schmelze an der Innenfläche des Bodens 3 verhindert, sodass sich keine Schicht aus Kristallen absetzen kann, die unerwünschte Axialkräfte auf das Schabelement 9 ausüben könnte. Bei dieser Ausführungsvariante kann das Drehlager der Welle 10 des Schabelements 9 weniger stark ausgebildet sein, was die Anlagenkosten verringert. In einer bevorzugten Ausführungsvariante der erfindungsgemässen Vorrichtung ist auch der Bereich des Gefässes 2 oberhalb der Kühlfläche 16 beheizbar. Zum Beheizen sind gemäss Fig. 1 die entsprechenden Bereiche des Gefässes 2, d.h. der Boden 3 des Gefässes 2 und der Bereich des Gefässes 2 oberhalb des Kühlbereiches 16 mit Heizmänteln 18, 19 verkleidet, die vorzugsweise mit Hilfe von flüssigen Wärmeträgern thermostatisierbar sind. Es können aber auch elektrisch betreibbare Heizmäntel vorgesehen sein. Der Bereich des Gefässes 2, der gekühlt wird, um im Inneren des Gefässes 2 die ringförmige Kühlfläche 16 zu bilden, ist beispielsweise von einem Kühlmantel 17 umgeben. Je nach Art der Schmelze sind die Temperaturen der Heizmäntel 18, 19 bzw. des Kühlmantels 17 regelbar.

Um zu verhindern, dass sich Kristalle am Schabelement anlagern, ist das Schabelement 9 beheizbar. Gemäss Fig. 1 ist dazu die Welle 10 beispielsweise als Hohlwelle ausgebildet, und sind die Schabarme 11, 11a gleichfalls hohl. Die Beheizung des Schabelements 9 erfolgt in diesem Fall mit einem flüssigen Wärmeträger, vorzugsweise mit Wasser, das über die Hohlwelle 10 eingebracht wird.

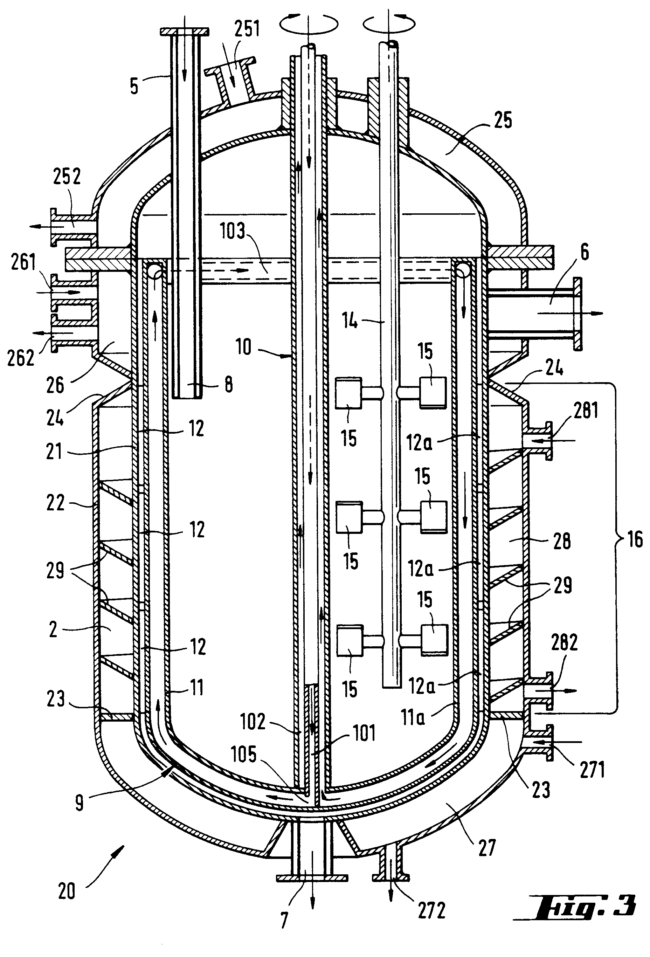

Das in Fig. 3 dargestellte Ausführungsbeispiel 20 der erfindungsgemässen Vorrichtung unterscheidet sich von dem anhand Fig. 1 erläuterten haupsächlich hinsichtlich der Heiz- bzw. Kühleinrichtungen für die entsprechenden zu beheizenden oder zu kühlenden Bereiche des Gefässes 2 und des Schabelementes 9. Das vertikal orientierte geschlossene Gefäss 2 weist in diesem schematisch dargestellten Ausführungsbeispiel einen Doppelmantel mit zwei Gefässwänden 21, 22 auf. Die beheizbaren bzw. kühlbaren Bereiche 25, 26, 27 bzw. 28 des Gefässes 2 sind beispielsweise durch Wände 23, 24 voneinander abgetrennt. Jeder dieser Bereiche ist mit einem Einlass und mit einem Auslass für ein Heiz- bzw. für ein Kühlmittel ausgestattet. Dabei sind in der Darstellung die Einlässe mit 251, 261, 271, bzw. 281 und die Auslässe entsprechend mit 252, 262, 272 bzw. 282 bezeichnet. Das Heiz- bzw. Kühlmittel ist in den entsprechenden Heiz- bzw. Kühlbereichen 25, 26, 27 bzw. 28 zwangsgeführt, beispielsweise mit Hilfe von Leitblechen 29, wie sie in Fig. 3 im Kühlbereich 28 angedeutet sind. Auf diese Weise geführt kann das Heiz- bzw. Kühlmittel gleichmässig alle Bereiche des jeweiligen Heiz- bzw. Kühlbereichs erreichen. Als Heizmittel kann beispielsweise Wärmeträgeröl, Wasser, Dampf oder Heissluft dienen. Als Kühlmittel können beispielsweise Wasser, Kühlsole oder Luft eingesetzt werden. Wie im Falle der elektrisch betreibbaren Heiz- bzw. Kühlmäntel in Fig. 1 kann auch bei diesem Ausführungsbeispiel der Erfindung die Temperatur in den einzelnen Heiz- bzw. Kühlzonen gemäss den Erfordernissen geregelt werden.

Das beheizbare Schabelement 9 weist bei dem in Fig. 3 schematisch dargestellten Ausführungsbeispiel 20 der erfindungsgemässen Vorrichtung eine rotierbare Welle 10 auf, die als Doppelmantelrohr ausgebildet ist. Dabei ist ein innerer axialer Kanal 101 von einem ringförmigen äusseren Kanal 102 umgeben. Am gefässbodennahen Ende der Welle 10 mündet vom inneren Kanal 101 ein Anschlussstück 105 durch den äusseren Kanal 102 in den hohl ausgebildeten Schabarm 11. Am oberen Ende des vertikalen Teiles des Schabarms 11 ist ein hohles Verbindungsstück 103 vorgesehen, dass mit dem oberen Ende des vertikalen Teiles des hohlen zweiten Schabarms 11a verbunden ist. Der zweite Schabarm 11a mündet schliesslich am bodennahen Bereich der Welle in den äusseren Ringraum 102 der Welle 10. Auf diese Weise ist ein Kreislauf für das Heizmedium vorbereitet, welches durch den inneren Kanal 101 in das Schabelement 10 eingebracht wird und von dort durch das Anschlussstück 105 in den Kanal des hohlen Schabarms 11 gelangt. Das Heizmedium steigt den vertikalen Bereich des Schabers 11 empor, gelangt in das hohle Verbindungsstück 103 und von dort in den Kanal des zweiten hohlen Schabarms 11a. Von dort gelangt es in den äusseren Ringraum der Welle 10und kann wieder zu einem Heizmittelreservoir zurückgefördert werden.

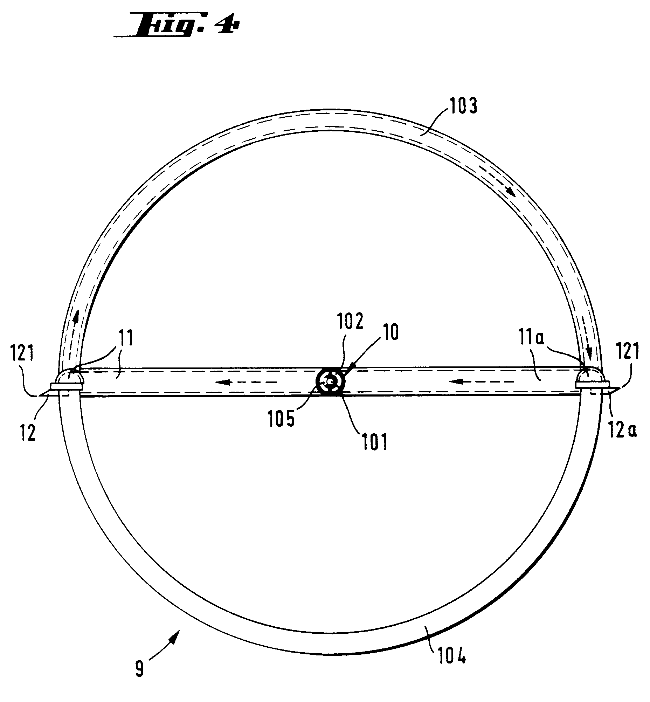

Wie in Fig. 4 angedeutet, kann das Verbindungsstück etwa halbkreisförmig ausgebildet sein. Aus Steifigkeitsgründen können die oberen Enden der vertikalen Bereiche der Schabarme 11, 11a noch mit einer weiteren vorzugsweise halbkreisförmigen Versteifung 104 verbunden sein. In Aufsicht (Fig. 4) bilden das Verbindungsstück 103 und die Versteifung 104 ein etwa kreisförmiges Gebilde. Die als Doppelmantelrohr ausgebildete Welle 10 erstreckt sich durch das Zentrum des Gebildes; die hohlen Schabarme 11, 11a verlaufen radial zu beiden Seiten der Welle 10 zu dem Verbindungsstück 103 bzw. zu der Versteifung 104. Die Versteifung 104 kann auch hohl ausgebildet sein und mit den Kanälen in den Schabarmen 11, 11a verbunden sein. Dann kann ein Heizmedium sowohl im Verbindungsstück 103 als auch in der Versteifung 104 zirkulieren, um ein Verkrusten zu verhindern. Vorzugsweise sind das Verbindungsstück 103 und die Versteifung 104 jedoch oberhalb des Überlaufs 6 angeordnet. Dadurch ist sichergestellt, dass sie nicht mit der Schmelze in Berührung kommen, sodass sich keine Kristalle auf den Oberflächen niederschlagen können.

Im Betrieb wird die flüssige Produktschmelze über den Einlass 5 in das Gefäss 2 eingebracht. Dabei wird darauf geachtet, dass die Temperatur der Schmelze stets oberhalb der Schmelztemperatur des Produktes gehalten wird. Kommt ein Teil der Schmelze in Berührung mit der Kühlfläche 16, so wird die Kristallisation teilweise ausgelöst und die gebildeten Kristalle lagern sich an der Kühlfläche 16 ab. Die Schabmesser 12, 12a an den Schabarmen 11, 11a des rotierenden Schabelements 9 gleiten entlang der Kühlfläche 16 und schaben die gebildeten Kristalle kontinuierlich von der Kühlfläche 16 ab. Mit Hilfe des Turbinenrührers 14, 15 wird die Schmelze agitiert, sodass sich die abgeschabten Kristalle gut mit der Schmelze vermischen, und neue Schmelze in Berührung mit der Kühlfläche kommt. Zugleich werden mit Hilfe des Turbinenrührers 14, 15 gegebenenfalls gebildete grössere Agglomerationen wieder zerkleinert. Dadurch, dass das Schabelement 9, seine Antriebswelle 10 und die Schabarme 11, 11a, das Einlassrohr 8 für eine bodennahe Zugabe der Schmelze, und vorzugsweise der Turbinenrührer 14, 15, der Boden 3 des Gefässes 2 und alle nicht zu kühlenden Bereiche des Gefässes 2 beheizt sind, ist sichergestellt, dass die Kristallisation nur an der Kühlfläche ausgelöst wird, und sich keine Verkrustungen am Schabelement 9, am Einlassrohr 8, am Gefässboden 3 oder an dem Turbinenrührer 14, 15 bilden können. Zudem ist dadurch auch gewährleistet, dass die Temperatur der Produktschmelze oberhalb der Schmelztemperatur des Produktes gehalten wird. Bei der Temperaturführung der Schmelze und des gebildeten Kristallbreis wird jedoch darauf geachtet, dass bereits gebildete Kristalle nicht wieder zerstört werden. Deshalb wird die Temperatur der Schmelze vorzugsweise nur knapp oberhalb der jeweiligen Schmelztemperatur gehalten. Der gebildete Kristallbrei wird üblicherweise zur weiteren Verarbeitung durch die Auslassöffnung 7 im Boden 3 des Gefässes 2 abgepumpt.

Der Betrieb der Vorrichtung kann "batch"-weise erfolgen, wobei das Gefäss 2 zunächst mit der Produktschmelze gefüllt wird, dann eine gewisse Zeit Kristalle gebildet werden bevor der Kristallbrei wieder aus dem Gefäss abgepumpt wird. Sodann wird der Vorgang mit neuer Produktschmelze wiederholt. Vorzugsweise erfolgt der Betrieb der erfindungsgemässen Vorrichtung jedoch kontinuierlich oder zumindest quasi-kontinuierlich. Bei dem quasi-kontinuierlichen Betrieb wird zumindest die Auslassöffnung 7 periodisch geschlossen und wieder geöffnet. Im kontinuierlichen Betrieb wird kontinuierlich Produktschmelze zugeführt und auch kontinuierlich aus dem Gefäss 2 entfernt.

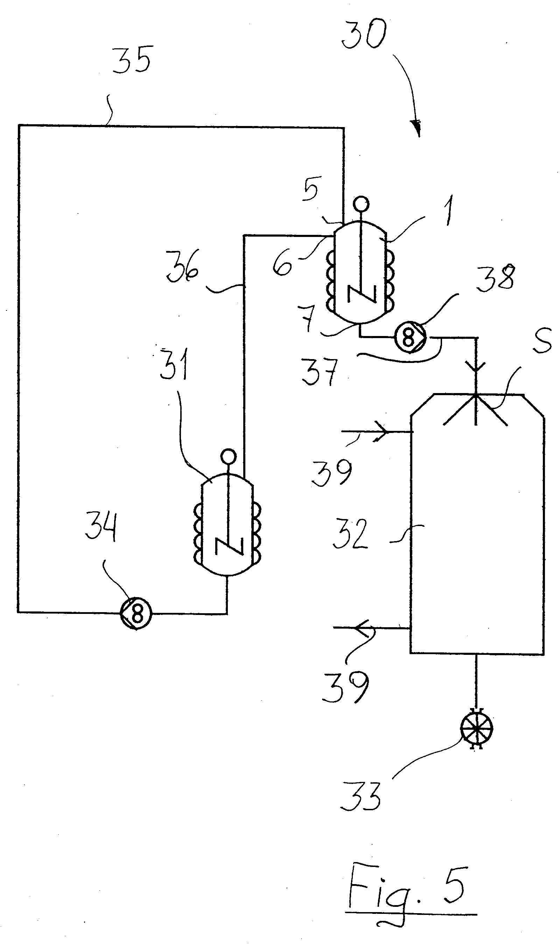

In Fig. 5 ist eine erfindungsgemässe Kristallisationsanlage 30 schematisch dargestellt. Sie umfasst ein Vorlagenbehältnis 31 für die Schmelze, eine Vorrichtung zur Erzeugung von Kristallkeimen in der Schmelze, beispielsweise den Vorkristallisator 1 oder 20 gemäss Fig. 1 oder Fig. 3 und eine Einrichtung zur Erzeugung eines Granulats aus dem vom Vorkristallisator 1 gelieferten Kristallbrei. Das Vorlagenbehältnis 31 und der Vorkristallisator 1, 20 sind über eine Rohrleitung 35 miteinander verbunden. Eine Pumpe 34 in der Rohrleitung 35 transportiert die Schmelze von dem Vorlagenbehältnis 31 zum Einlass 5 des Vorkristallisators 1, 20. Der Überlauf 6 des Vorkristallisators 1, 20 ist über eine Rohrleitung 37 mit dem Vorlagenbehältnis 31 verbunden. Eine weitere Rohrleitung 37 verbindet den Ausgang 7 des Vorkristallisators mit der Einrichtung zur Erzeugung des Granulats. Dabei wird der Kristallbrei mit Hilfe einer in der Rohrleitung 36 angeordneten Pumpe 38 gefördert. Es versteht sich, dass die Rohrleitungen 35, 36 und 37 beheizbar sind, um ein Verstopfen der Rohrleitungen zu verhindern. Die Einrichtung zur Erzeugung des Granulats kann beispielsweise ein Kühlband sein, auf welches der Kristallbrei portionsweise aufgebracht wird und auf welchem er durch Abkühlung auskristallisiert. Vorzugsweise ist die Einrichtung jedoch ein Prillturm 32. In dem Prillturm 32 wird die als Kristallbrei vorliegende mit Kristallkeimen versehene angeimpfte Schmelze S in einen Gasstrom 39 versprüht bzw. vertropft. Der Gasstrom 39 kann ein gekühlter Luftstrom sein, es kann aber auch erforderlichenfalls ein (gekühltes) Inertgas eingesetzt werden. Die Tropfen kristallisieren während ihres Absinkens im freien Fall. Das derart erzeugte Granulat wird am Turmboden ausgetragen und beispielsweise zu einem Zyklon 33 gefördert in dem das Granulat aus dem Gasstrom abgeschieden wird.

Bei der räumlichen Anordnung des Vorlagenbehältnisses 31 und des Vorkristallisators 1, 20 wird vorzugsweise darauf geachtet, dass das Vorlagenbehältnis 31 niveaumässig tiefer angeordnet ist als die Auslassöffnung 7 des Vorkristallisators 1, 20. Durch diese Anordnung lässt sich der Füllstand der Schmelze in dem Vorkristallisator 1, 20 sehr einfach regeln. Die Pumpe 34 in der Rohrleitung 35, welche das Vorlagenbehältnis 31 und den Einlass 5 des Vorkristallisators 1, 20 verbindet, wird mit einer Förderleistung betrieben, die etwa 1% bis etwa 10% grösser ist als die Förderleistung der Pumpe 38 in der Auslassrohrleitung 37. Der Vorkristallisator 1, 20 wird auf diese Weise mit Schmelze gefüllt bis der Füllstand das Niveau des Überlaufs 6 erreicht. Überschüssige Schmelze läuft dann über den Überlauf 6 in die Rohrleitung 36 ab. Dadurch, dass das Vorlagenbehältnis 31 tiefer angeordnet ist als der Vorkristallisator 1, 20, ist keine zusätzliche Förderpumpe erforderlich, um die überschüssige Schmelze zurück in das Vorlagenbehältnis 31 zu transportieren. Auf diese einfache Weise ist sichergestellt, dass im Vorkristallisator 1, 20 während des Betriebs ein einmal erreichter Maximalpegelstand der Schmelze aufrecht erhalten wird.

In einer alternativen Betriebsweise, wenn der Kristallbrei vom Vorkristallisator 1, 20 drucklos zu einer Granuliervorrichtung, beispielsweise zu einem Kühlband transportiert werden soll, kann der Überlauf 6 über die Rohrleitung 36 mit der Eingangsöffnung des tiefer angeordneten Kühlbandes verbunden sein. Der Auslass 5 im Gefässboden des Vorkristallisators 1, 20 kann bei dieser Betriebsvariante ebenfalls mit der Eingangsöffnung des darunter angeordneten Kühlbandes verbunden sein. Er könnte aber auch mit dem Vorlagenbehältnis verbunden sein, so dass das unterhalb des Niveaus des Überlaufs befindliche Kristall-Schmelze Gemisch zurück in den Vorlagenbehälter 31 gelangen kann.

Die Verwendung eines Prillturms als Granulationsanlage ist erstrebenswert, da auf diese Weise in relativ kurzer Zeit eine sehr grosse Menge Granulat werden kann. Zudem erlaubt es der Prillturm, feine Granulate kleiner Korngrössen mit sehr geringen Produktqualitätsschwankungen und geringem Staubanteil herzustellen. Die Anwendung von Prilltürmen war bislang durch die geringe Fallzeit der Schmelze im Prillturm, während der das Produkt kristallisiert sein musste, eingeschränkt. Insbesondere bei Produkten mit hohen Molekulargewichten (z.B. Mol.-Gew. > 300) ist die erforderliche Zeit für die der Kristallisation vorausgehende Keimbildung sehr hoch, sodass die Fallzeit in einem Prillturm im allgemeinen nicht ausreichend war. Durch die Vorschaltung einer erfindungsgemässen Vorrichtung zum Erzeugen von Kristallkeimen in der Schmelze kann ein gewünschter Vorkristallisationsgrad der Produktschmelze bereits im Vorkristallisator eingestellt werden, sodass nunmehr auch viele Produkte mit hohen Molekulargewichten in kurzer Zeit, in grossen Mengen in einem Prillturm kristallisiert werden können.

Die erfindungsgemässe Vorrichtung ist relativ einfach in der Konstruktion. Das Schabelement ist nur einfach gelagert, was eine geringere Verschleissanfälligkeit gewährleistet. Es sind keine zusätzlichen Bypass-Leitungen für die ausreichende Zirkulation der Schmelze erforderlich, sodass auch der erforderliche Platzbedarf der Vorrichtung relativ gering ist. Es bestehen keine besonderen konstruktiven Erfordernisse an das Gefäss, es kann ein modifizierter Rührkessel sein. Insgesamt ergibt sich eine konstruktiv relativ einfache Lösung, die einen geringen Platzbedarf aufweist und kostengünstig erstellbar ist.

## Patentansprüche

1. Vorrichtung zur Erzeugung von Kristallkeimen in Schmelzen umfassend ein geschlossenes, vorzugsweise zylindrisches, Gefäss (2) mit wenigstens einem Einlass (5) für die Schmelze und wenigstens einer Auslassöffnung (7) für die mit Kristallkeimen versehene angeimpfte Schmelze, dessen Gefässwand einen Kühlbereich (16) aufweist, und ein im Gefäss angeordnetes motorisch antreibbares rotierbares Schabelement (9) mit wenigstens einem wandgängigen Schabarm (11, 12), der im Betrieb an der Innenwand des Gefässes entlangstreicht, dadurch gekennzeichnet, dass das Gefäss (2) vertikal orientiert ist und einen Gefässboden (3) aufweist; dass der Kühlbereich (16) als oberhalb des Gefässbodens (3) ringförmig verlaufende Kühlfläche ausgebildet ist; dass das Schabelement (9) eine motorisch antreibbare rotierende Welle (10) umfasst, die sich axial durch das Gefäss (2) bis kurz vor den Gefässboden (3) erstreckt und an ihrem gefässbodenseitigen Ende mit einem Schabarm (11) ausgestattet ist, der sich ausgehend vom gefässbodennahen Ende der Welle (10) zunächst in Richtung der Gefässwand erstreckt und dort vertikal zu der ringförmigen Kühlfläche (16) und im wesentlichen achsparallel zu der rotierenden Welle (10) verläuft und am der Kühlfläche (16) gegenüberliegenden vertikalen Bereich mit wenigstens einem Schabmesser (12) ausgestattet ist, welches im Betrieb im Bereich der Kühlfläche (16) an der Innenwand des Gefässes (2) entlangschneidet; und dass das Schabelement (9) beheizbar ist.

2. Vorrichtung nach Anspruch 1, dadurch gekennzeichnet, dass das Schabelement (9) hohl und für die Zu- und Abfuhr eines Heizmediums ausgebildet ist.

3. Vorrichtung nach Anspruch 2, dadurch gekennzeichnet, dass das Schabelement (9) als Schabanker ausgebildet ist, wobei zwei Schabarme (11, 11a) einander gegenüberliegen und sich ausgehend vom gefässbodennahen Ende der Welle (10) zunächst in Richtung der Gefässwand erstrecken und dort im wesentlichen parallel zu der ringförmigen Kühlfläche (16) und achsparallel zu der rotierenden Welle (10) verlaufen und an den der Kühlfläche (16) gegenüberliegenden Bereichen mit mehreren in einem Abstand (122) untereinander angeordneten Schabmessern (12, 12a) ausgestattet sind, die bezüglich der Kühlfläche (16) vorzugsweise verstellbar sind und im Betrieb im Bereich der Kühlfläche (16) an der Innenwand des Gefässes (2) entlangschneiden.

4. Vorrichtung nach Anspruch 3, dadurch gekennzeichnet, dass die rotierende Welle (10) des Schabelements (9) als Doppelmantelrohr ausgebildet ist, welches einen axialen inneren Kanal (101) und einen diesen umgebenden äusseren Ringkanal (102) aufweist, dass der innere Kanal mit einem der hohlen Schabarme (11) verbunden ist, das die Enden der Schabarme (11, 11a) mit einem hohlen Verbindungsstück (103) verbunden sind, und dass der zweite hohle Schabarm (11a) mit dem äusseren Ringkanal (102) des Doppelmantelrohrs verbunden ist, wobei ein Heizmedium durch den inneren Kanal (101) in das Schabelement (9) einbringbar ist, durch den einen hohlen Schabarm (11), das hohle Verbindungstück (103) und den anderen hohlen Schabarm (11a) zirkulierbar ist, und schliesslich durch den äusseren Ringkanal (102) des Doppelmantelrohrs wieder aus dem Schabelement (9) ableitbar ist.

5. Vorrichtung nach einem der vorangehenden Ansprüche, dadurch gekennzeichnet, dass das Schabelement (9) mehrere Schabarme (11), vorzugsweise bis zu 4 Schabarme aufweist, die am gefässbodennahen Ende der Welle (10) am Umfang verteilt angeordnet sind.

6. Vorrichtung nach einem der vorangehenden Ansprüche, dadurch gekennzeichnet, dass sich vom Einlass (5) für die Schmelze ein Rohr (8) durch das Gefäss (2) erstreckt, das oberhalb des Schabarms (11) mündet, und dessen Rohrwandung beheizbar ist.

7. Vorrichtung nach einem der vorangehenden Ansprüche, dadurch gekennzeichnet, dass innerhalb des Gefässes ein vorzugsweise beheizbarer Turbinenrührer (14, 15) vorgesehen ist, der sich vorzugsweise etwa achsparallel zu dem Schabelement (9) bis kurz vor den Gefässboden (3) erstreckt.

8. Vorrichtung nach einem der vorangehenden Ansprüche, dadurch gekennzeichnet, dass der Gefässboden (3) und die Gefässbereiche oberhalb des ringförmigen Kühlbereiches (16) beheizbar sind.

9. Vorrichtung nach Anspruch 8, dadurch gekennzeichnet, dass die beheizbaren Gefässbereiche mit Heizmänteln verkleidet sind, die vorzugsweise mit einem flüssigen Wärmeträger thermostatisierbar sind, und dass die Kühlbereiche von einem Kühlmantel umgeben sind.

10. Vorrichtung nach Anspruch 8, dadurch gekennzeichnet, dass das Gefäss (2) mit einem Doppelmantel versehen ist, und dass in Heizzonen (25, 26, 27) des Gefässes (2) zwischen der inneren Wand (21) und der äusseren Wand (22) des Doppelmantels ein Heizmedium und in Kühlzonen (28) des Gefässes (2) ein Kühlmedium, vorzugsweise durch zwischen den Wänden (21, 22) vorgesehene Leitbleche (29) geleitet, zwangsführbar ist.

11. Kristallisationsanlage für die Herstellung von Granulaten aus zwei-phasigen Schmelzen umfassend ein Vorlagenbehältnis (31) für die Schmelze, eine damit über eine Rohrleitung (35) verbundene Vorrichtung (1; 20) zur Erzeugung von Kristallen in der Schmelze und eine Einrichtung (32) zur Kristallisation der mit Kristallkeimen versehenen Schmelze, deren Eingang über eine Rohrleitung (37) mit einem Auslass (7) der Vorrichtung (1; 20) verbunden ist, gekennzeichnet durch eine Vorrichtung zur Erzeugung von Kristallkeimen in einer Schmelze gemäss einem der Ansprüche 1 - 10.

12. Kristallisationsanlage gemäss Anspruch 11, dadurch gekennzeichnet, dass das Vorlagenbehältnis (31) niveaumässig tiefer angeordnet ist, als der Auslass (7) der Vorrichtung zur Erzeugung von Kristallkeimen (1; 20), und dass der Überlauf (6) über eine Rohrleitung (36) mit dem Vorlagenbehältnis (31) verbunden ist.

13. Kristallisationsanlage gemäss Anspruch 12, dadurch gekennzeichnet, dass eine Schmelzeförderpumpe (34) in der Verbindungsrohrleitung (35) des Vorlagenbehältnisses (31) mit der Vorrichtung (1; 20) zur Erzeugung von Kristallen in der Schmelze mit einer Förderleistung betreibbar ist, die etwa 1% bis etwa 10% höher als die Förderleistung einer Förderpumpe (38) in der Ablassrohrleitung (37) ist.

14. Kristallisationsanlage gemäss einem der Ansprüche 11-13, dadurch gekennzeichnet, dass die Einrichtung (32) zur Kristallisation der mit Kristallkeimen versehenen Schmelze ein Prillturm ist, in dem die mit Kristallkeimen versehene angeimpfte Schmelze in einen, vorzugsweise gekühlten, Gasstrom versprüht bzw. vertropft wird, wobei die Tropfen während ihres Absinkens im freien Fall kristallisieren und das derart erzeugte Granulat am Turmboden austragbar ist.

15. Kristallisationsanlage gemäss Anspruch 14, dadurch gekennzeichnet, dass der gekühlte Gasstrom ein Inertgas ist.

## Claims

1. An apparatus for producing seed crystals in melts comprising a closed, preferably cylindrical, vessel (2) having at least one inlet (5) for the melt and at least one outlet opening (7) for the inoculated melt provided with seed crystals, the vessel wall of which has a cooling region (16), and a motor-driven rotatable scraping unit (9) arranged in the vessel and having at least one scraping arm (11, 12) which moves over the wall and which during operation sweeps along the inner wall of the vessel, wherein the vessel (2) is vertically oriented and has a vessel base (3); the cooling region (16) is constructed as an annular cooling surface above the vessel base (3); the scraping unit (9) comprises a motor-driven rotating shaft (10) which extends axially through the vessel (2) as far as a point just short of the vessel base (3) and is provided at its end towards the vessel base with a scraping arm (11) which, starting from the end of the shaft (10) close to the vessel base, extends first in the direction towards the vessel wall and thence parallel with respect to the annular cooling surface (16) and substantially axially parallel to the rotating shaft (10) and is provided in the vertical region opposite the cooling surface (16) with at least one scraping blade (12) which during operation cuts along the inner wall of the vessel (2) in the region of the cooling surface (16); and the scraping unit (9) is heatable.

2. An apparatus according to claim 1, wherein the scraping unit (9) is hollow and is constructed for the supply and removal of a heating medium.

3. An apparatus according to claim 2, wherein the scraping unit (9) is constructed in the form of a scraping anchor, two scraping arms (11, 11a) being located opposite one another and, starting from the end of the shaft (10) close to the vessel base, extending first in the direction towards the vessel wall and thence substantially parallel to the annular cooling surface (16) and axially parallel to the rotating shaft (10) and being provided in the regions opposite the cooling surface (16) with several scraping blades (12, 12a) arranged with a spacing (122) one below the other, which scraping blades are preferably adjustable relative to the cooling surface (16) and during operation cut along the inner wall of the vessel (2) in the region of the cooling surface (16).

4. An apparatus according to claim 3, wherein the rotating shaft (10) of the scraping unit (9) is constructed in the form of a double-walled pipe having an axial inner channel (101) and an outer annular channel (102) surrounding the latter; the inner channel is connected to one of the hollow scraping arms (11); the ends of the scraping arms (11, 11a) are connected to a hollow connection piece (103); and the second hollow scraping arm (11a) is connected to the outer annular channel (102) of the double-walled pipe, it being possible to introduce a heating medium through the inner channel (101) into the scraping unit (9), to circulate the heating medium through one hollow scraping arm (11), the hollow connection piece (103) and the other hollow scraping arm (11a), and finally to remove the heating medium again from the scraping unit (9) through the outer annular channel (102) of the double-walled pipe.

5. An apparatus according to any one of the preceding claims, wherein the scraping unit (9) has several, preferably up to 4, scraping arms (11) which are arranged distributed around the circumference at the end of the shaft (10) close to the vessel base.

6. An apparatus according to any one of the preceding claims, wherein a pipe (8) extends through the vessel (2) from the inlet (5) for the melt, which pipe (8) has its mouth above the scraping arm (11) and the wall of which pipe is heatable.

7. An apparatus according to any one of the preceding claims, wherein there is provided inside the vessel a preferably heatable turbine agitator (14, 15) which preferably extends approximately axially parallel to the scraping unit (9) as far as a point just short of the vessel base (3).

8. An apparatus according to any one of the preceding claims, wherein the vessel base (3) and the regions of the vessel above the annular cooling region (16) are heatable.

9. An apparatus according to claim 8, wherein the heatable regions of the vessel are clad with heating jackets which are preferably kept at a desired temperature with a liquid heating medium, and the cooling regions are surrounded by a cooling jacket.

10. An apparatus according to claim 8, wherein the vessel (2) is provided with a double-walled jacket, and a heating medium can be conducted into heating zones (25, 26, 27) of the vessel (2) between the inner wall (21) and the outer wall (22) of the double-walled jacket, and a cooling medium can be conducted into cooling zones (28) of the vessel (2), preferably guided by guide plates (29) provided between the walls (21, 22).

11. A crystallisation plant for the production of granules from two-phase melts, comprising a supply container (31) for the melt, an apparatus (1; 20), connected thereto *via* a pipeline (35), for producing crystals in the melt, and a device (32) for the crystallisation of the melt provided with seed crystals, the inlet of which device (32) is connected *via* a pipeline (37) to an outlet (7) of the apparatus (1; 20), which crystallisation plant comprises an apparatus for producing seed crystals in a melt in accordance with any one of claims 1 to 10.

12. A crystallisation plant according to claim 11, wherein the supply container (31) is arranged at a lower level than is the outlet (7) of the apparatus for producing seed crystals (1; 20), and the overflow (6) is connected *via* a pipeline (36) to the supply container (31).

13. A crystallisation plant according to claim 12, wherein a melt transport pump (34) in the pipeline (35) connecting the supply container (31) to the apparatus (1; 20) for producing crystals in the melt is operable at a pumping rate approximately 1 % to approximately 10 % higher than the pumping rate of a transport pump (38) in the outlet pipeline (37).

14. A crystallisation plant according to any one of claims 11 to 13, wherein the device (32) for the crystallisation of the melt provided with seed crystals is a prill tower in which the inoculated melt provided with seed crystals is sprayed or introduced dropwise into a current of gas, preferably a cooled current of gas, the drops crystallising during their freefall descent and the granules so produced being dischargeable at the base of the tower.

15. A crystallisation plant according to claim 14, wherein the cooled current of gas is an inert gas.

## Revendications

1. Dispositif pour la génération de germes cristallins dans les bains de fusion, comportant un récipient clos, de préférence cylindrique, (2), comprenant au moins une entrée (5) pour le bain de fusion et au moins une ouverture de sortie (7) pour le bain de fusion auquel ont été inoculés des germes cristallins, récipient dont la paroi présente une zone de refroidissement (16), et comprenant un élément racleur rotatif (9), disposé dans le récipient, pouvant être entraîné par un moteur et présentant au moins un bras racleur (11, 12), en contact avec la paroi, qui, en service, frotte contre la paroi intérieure du récipient, caractérisé par le fait que le récipient (2) est orienté verticalement et présente un fond de récipient (3); que la zone de refroidissement (16) est conçue en tant que surface de refroidissement d'allure annulaire au-dessus du fond (3) du récipient; que l'élément racleur (9) comporte un arbre rotatif (10) qu'un moteur peut entraîner, qui s'étend axialement à travers le récipient (2) jusque peu avant le fond (3) du récipient et qui est équipé, à son extrémité située du côté du fond du récipient, d'un bras racleur (11) qui, en partant de l'extrémité de l'arbre (10) proche du fond du récipient, s'étend tout d'abord en direction de la paroi du récipient et s'y oriente verticalement par rapport à la surface annulaire de refroidissement (16) et sensiblement parallèlement à l'axe de l'arbre rotatif (10) et est équipé, sur la zone verticale située en face de la surface de refroidissement (16), d'au moins un couteau racleur (12) qui, en service, coupe dans la zone de la surface de refroidissement (16), le long de, et contre, la paroi intérieure du récipient (2).

2. Dispositif selon la revendication 1, caractérisé par le fait que l'élément racleur (9) est creux et qu'il est prévu pour l'arrivée et le départ d'un fluide chauffant.

3. Dispositif selon la revendication 2, caractérisé par le fait que l'élément racleur (9) a la forme d'une ancre racleuse, dans laquelle deux bras racleurs (11, 11a) sont situés en face l'un de l'autre et, en partant de l'extrémité de l'arbre (10) proche du fond du récipient, s'étendent tout d'abord en direction de la paroi du récipient et s'y orientent sensiblement parallèlement à la surface annulaire de refroidissement (16) et parallèlement à l'axe de l'arbre rotatif (10) et, dans les zones situées en face de la surface de refroidissement (16), sont équipés de plusieurs couteaux racleurs (12, 12a) qui sont disposés l'un en dessous de l'autre à une certaine distance (122), qui sont de préférence réglables par rapport à la surface de refroidissement (16) et qui, en service, coupent dans la zone de la surface de refroidissement (16), le long de, et contre, la paroi intérieure du récipient (2).

4. Dispositif selon la revendication 3, caractérisé par le fait que l'arbre rotatif (10) de l'élément racleur (9) est conçu sous forme d'un tube à double enveloppe qui présente un canal intérieur axial (101) et un canal annulaire extérieur (102) entourant celui-ci, que le canal intérieur est relié à l'un des bras racleurs creux (11), que les extrémités des bras racleurs (11, 11a) sont reliées à une pièce de liaison creuse (103) et que le second bras racleur creux (11a) est relié au canal annulaire extérieur (102) du tube à double enveloppe, dispositif dans lequel un fluide chauffant peut être amené par le canal intérieur (101) dans l'élément racleur (9), peut circuler à travers le premier bras racleur creux (11), la pièce de liaison creuse (103) et l'autre bras racleur creux (11a), et peut finalement sortir hors de l'élément racleur (9) par le canal annulaire extérieur (102) du tube à double enveloppe.

5. Dispositif selon l'une des revendications précédentes, caractérisé par le fait que l'élément racleur (9) présente plusieurs bras racleurs (11), de préférence jusqu'à 4 bras racleurs qui sont disposés, répartis sur la périphérie, à l'extrémité de l'arbre (10) proche du fond du récipient.

6. Dispositif selon l'une des revendications précédentes, caractérisé par le fait que depuis l'entrée (5) prévue pour le bain de fusion, s'étend à travers le récipient (2) un tube (8) qui débouche au-dessus du bras racleur (11) et dont la paroi tubulaire peut être chauffante.

7. Dispositif selon l'une des revendications précédentes, caractérisé par le fait qu'à l'intérieur du récipient est prévu un agitateur à turbine (14, 5), de préférence chauffant, qui s'étend de préférence à peu près parallèlement à l'axe de l'élément racleur (9) jusque peu avant le fond (3) du récipient.

8. Dispositif selon l'une des revendications précédentes, caractérisé par le fait que le fond du récipient (3) et les zones du récipient situées au-dessus de la zone annulaire de refroidissement (16) peuvent être chauffés.

9. Dispositif selon la revendication 8, caractérisé par le fait que les zones chauffantes du récipient sont revêtues d'enveloppes chauffantes qui sont de préférence régulées par thermostat avec un fluide caloporteur liquide et que les zones de refroidissement sont entourées d'une enveloppe refroidissante.

10. Dispositif selon la revendication 8, caractérisé par le fait que le récipient (2) est muni d'une double enveloppe et que l'on peut faire passer à force, de préférence guidé par des tôles déflectrices (29) prévues entre les parois (21, 22), dans les zones de chauffage (25, 26, 27) du récipient (2), entre la paroi intérieure (21) et la paroi extérieure (22) de la double enveloppe, un fluide chauffant et, dans les zones de refroidissement (28) du récipient (2), un fluide refroidissant.

11. Installation de cristallisation pour la fabrication de granulats à partir de bains de fusion à deux phases, comportant un récipient de stockage (31) pour le bain de fusion, un dispositif (1; 20), qui lui est relié par l'intermédiaire d'une conduite tubulaire (35), pour la génération de cristaux dans le bain de fusion et, pour la cristallisation du bain de fusion muni de germes cristallins, un appareil (32) dont l'entrée est reliée avec une sortie (7) du dispositif (1; 20) par l'intermédiaire d'une conduite tubulaire (37), caractérisée par un dispositif pour la génération de germes cristallins dans un bain de fusion conforme à l'une des revendications 1-10.

12. Installation de cristallisation selon la revendication 11, caractérisée par le fait que le récipient de stockage (31) est disposé à un niveau inférieur à celui de la sortie (7) du dispositif pour la génération de germes cristallins (1; 20) et que le trop-plein (6) est relié au récipient de stockage (31) par l'intermédiaire d'une conduite tubulaire (36).

13. Installation de cristallisation selon la revendication 12, caractérisée par le fait qu'une pompe (34) de transport du bain de fusion placée sur la conduite tubulaire de liaison (35) du récipient de stockage (31) avec le dispositif (1; 20) pour la génération de cristaux dans le bain de fusion peut fonctionner avec un débit de transport qui est d'environ 1% à environ 10% supérieur au débit de transport d'une pompe de transport (38) placée sur la conduite tubulaire de sortie (37).

14. Installation de cristallisation selon l'une des revendications 11-13, caractérisée par le fait que l'appareil (32) pour la cristallisation du bain de fusion muni de germes cristallins est une tour de prilling dans laquelle le bain de fusion, auquel ont été inocules des germes cristallins, donne, dans un flux de gaz, de préférence refroidi, des gouttelettes de pulvérisation ou des gouttes, les gouttes cristallisant pendant leur descente en chute libre et le granulat ainsi produit étant récolté sur le fond de la tour.

15. Installation de cristallisation selon la revendication 14, caractérisée par le fait que le flux de gaz refroidi est un gaz inerte.
